# EUROPÄISCHE PATENTSCHRIFT

(11) **EP 0 818 652 B1**
(45) Veröffentlichungstag und Bekanntmachung des Hinweises auf die Patenterteilung: **18.12.2002**
(21) Anmeldenummer: 97110952.5
(22) Anmeldetag: 02.07.1997
(51) Int. Cl.: F21S 4/00, F21K 7/00

(54) **Beleuchtungsleiste und Verfahren zur Herstellung**
Lighting strip and method of manufacturing
Rampe d'éclairage et méthode de fabrication

(30) Priorität: 11.07.1996 DE 19627856
(43) Veröffentlichungstag der Anmeldung: 14.01.1998
(73) Patentinhaber: HAPPICH Fahrzeug- und Industrieteile GmbH, 42285 Wuppertal (DE)
(72) Erfinder: Marcus, Armin, 42111 Wuppertal (DE)

(56) Entgegenhaltungen:
- EP-A- 0 677 695
- EP-A- 0 760 448
- WO-A-92/14092
- DE-A- 1 516 677
- FR-A- 2 283 565
- GB-A- 2 215 024
- GB-A- 2 284 306
- US-A- 4 173 035
- US-A- 5 321 593

## Beschreibung

Die Erfindung bezeiht sich auf eine Beleuchtungsleiste mit einem Aufnahmekanal und mit einem darin anordbaren mehradrigen Leiterstreifen, der mit in Reihe hintereinander angeordneten LED-Elementen bestückt ist, wobei der Leiterstreifen aus einer Vielzahl von abgelängten, in axialer Richtung aneinandergereihten Leiterstreifenabschnitten besteht, jeweils zwischen zwei axial aneinandergrenzenden Leiterstreifenabschnitten eine mit diesen elektrisch leitend verbundene Leiterplatten angeordnet ist, und jede Leiterplatte mit einem LED-Element bestückt ist.

Aus dem Dokument WO 92/14092 A ist ein Beleuchtungssystem gemäß dem Oberbegriff des Anspruchs 1 bekanntgeworden, welches eine Beleuchtungsleiste mit einem Aufnahmekanal und mit einer darin angeordneten Lichtleitung umfasst. Die Lichtleitung setzt sich zusammen aus einem Satz einer Anzahl von verschieden langen, flexiblen Leiterplatten bzw. gedruckten Schaltungen, die mit LED-Elementen bestückt sind und aus jeweils zwei aneinandergrenzende Leiterplatten miteinander verbindende Kupplungselemente, wobei zwischen den Leiterplatten und den Kupplungselementen jeweils Schnappverbindungen vorgesehen sind. Dabei können auch zwischen zwei Leiterplatten zwei durch Drahtbrücken miteinander verbundene Kupplungselemente vorgesehen sein. Das bekannte Beleuchtungssystem kann gemäß einer besonderen Ausführungsform in rohrförmigen, durchscheinenden bzw. durchsichtigen Gehäusen mit einem rechteckigen Querschnitt angeordnet sein, um ein System bereitzustellen, das wasserdicht wenigstens dann ist, wenn die einzelnen modularen Komponenten zusammengebaut sind, um ein längliches Beleuchtungssystem auszubilden. Die Herstellung einer Wasserdichtheit wird über Abdichtelemente, Dichtungen, O-Ringdichtungen, Kupplungselemente aus elastisch nachgiebigem Abdichtungsmaterial u. dgl. erreicht. Das bekannte Beleuchtungssystem nach der WO 92/14092 A weist einen recht komplizierten Aufbau auf und scheint in bezug auf eine Wasserdichtheit nicht unproblematisch zu sein.

Eine Beleuchtungsleiste anderer Art ist in der GB-A-2 284 306 A gezeigt. Diese betrifft einen extrudierten länglichen elektrolumineszierenden Leuchtstreifen mit einem Elektrolumineszenz- Leuchtelement mit einem Paar von in Längsrichtung verlaufenden Stromschienen, die durch ein Extrudat mit niedriger Dampfdurchlässigkeit eingekapselt sind, das einen profilförmigen Querschnitt besitzt und das Elektrolumineszenz-Leuchtelemente sowie die Stromschienen einschließlich deren Längsenden einkapselt und abdichtet.

In der DE 15 16 677 A ist ein Straßenmarkierungsstreifen offenbart, der aus einem in die Fahrbahndecke bzw. Fahrbahnbegrenzung einzulassenden Strang aus plastischem Material besteht, wobei in dem Strang durchgehende elektrische Leiter und in Abständen mit diesen verbundene Kontakteile zum auswechselbaren Abschließen elektrischer Lichtquellen eingebettet sind , die jeweils durch eine wenigstens teilweise durchscheinende, am Strang gehaltene Abdeckung abgedeckt sind. Bei den Lichtquellen kann es sich um Glühlampen geringer Leistung, Glühlampen, Leuchtdioden oder Lumineszenzlampen handeln. In dieser Druckschrift ist auch gezeigt, daß eine Glühlampe vollständig in der Abdeckung, die aus durchscheinendem Kunststoff oder Glass besteht, eingebettet sein kann.

Die EP-A-0 677 695 zeigt eine Beleuchtungseinrichtung, insbesondere Notbeleuchtungseinrichtung für das Innere von Wasserfahrzeugen, mit in Abständen zueinander auf einem Träger angeordneten und durch elektrische Leiter verbundenen Leuchtkörpern, wobei der Träger als eine flexible Trägerbahn ausgebildet und in einem als Fußleiste oder dgl. ausgebildeten Gehäuse angeordnet ist.

Eine Beleuchtungsleiste noch anderen Art zeigt die EP-0 669 492 A1. Bei dieser bekannten Beleuchtungsleiste ist ein Leiterstreifen vorgesehen, der aus einer sog. "Kaplan-Folie" besteht. Es handelt sich hierbei um einen mit einer Metallbeschichtung versehenen Kunststoffstreifen, bei dem die Leiterbahnen durch Wegätzen von Metallbeschichtungsbereichen freigelegt sind. Auf diesen Leiterstreifen sind in vorbestimmten Abständen Leuchtmittel, im folgenden kurz LED-Elemente genannt, aufgelötet. Die Herstellung der Leiterstreifen fußt auf einer relativ teuren Technologie, bedarf vieler Arbeitsschritte und setzt den Einsatz hochwertiger Materialien voraus. Obgleich der mit Leiterbahnen versehene Folienstreifen in der Regel mit einer Beschichtung versehen wird, haben sich in der Praxis Dichtprobleme ergeben und es hat sich gezeigt, daß der Folienstreifen sich schwierig, insbesondere in Eckbereichen verlegen läßt (Knickgefahr) und auch recht kratzempfindlich ist.

Ausgehend von einer Beleuchtungsleiste der eingangs genannten Art liegt der Erfindung die Aufgabe zugrunde, diese mit einem Leiterstreifen auszustatten, der einfach und kostengünstig in der Herstellung und in der Montage sein soll und der sich durch große Funktionssicherheit auszuzeichnen vermag.

Die zur Lösung dieser Aufgabe vorgesehen Beleuchtungsleiste zeichnet sich erfindungsgemäß dadurch aus, daß die Endbereiche der Leiterstreifenabschnitte (9), die Leiterplatten (10) und die LED-Elemente (4) jeweils in einem nur die Lichtaustrittsseite der LED-Elemente (4) freilassenden, durch unmittelbares Umspritzen gebildetes farbiges Kunststoffgehäuse oder jeweils in einem durch unmittelbares Umspritzen mit einem transparenten Kunststoffmaterial, wie Polycarbonat, gebildetes Kunststoffgehäuse (26) eingekapselt sind, und daß der Leiterstreifen (3) in einem Aufnahmekanal (24) einer Abdeckleiste (22) aus undurchsichtigem Material angeordnet ist, die zum Durchtritt der LED-Elemente (4) in Reihe hintereinander ausgebildete Lochungen (25) aufweist, wobei der Leiterstreifen (3) und die Abdeckleiste (22) eine vorkonfektionierte Einbaueinheit zur Anordnung im Aufnahmekanal (2) der Beleuchtungsleiste ist und diese Einbaueinheit durch eine, ebenfalls in den Aufnahmekanal (2) eingreifende und hier kraft- und/oder formschlüssig gehaltene Abschlußprofilleiste (5) aus einem transparenten Kunststoffmaterial überdeckt und lageorientiert gehalten ist.

Aufgrund dieser erfindungsgemäßen Maßnahmen ist eine Beleuchtungsleiste mit einem Leiterstreifen geschaffen, die wesentlich kostengünstiger als bekannte Vorbilder hergestellt und angeboten werden kann. Die Verlegung des Leiterstreifens bzw. Beleuchtungsstreifens innerhalb der entsprechenden Kanäle der Beleuchtungsleiste ist nun vereinfacht, insbesondere im Bereich scharfer Ecken. Durch das Umspritzen wird eine zuverlässige Abdichtung erreicht, so daß die Beleuchtungsleiste auch in Feuchträumen oder gar unter Wasser verlegt werden kann, und zwar ohne Gefahr eines Kurzschlusses.

Bevorzugterweise ist bei der erfindungsgemäßen Beleuchtungsleiste vorgesehen, daß die einzelnen Adern des Leiterstreifens mit einer Isolierung umhüllt sind, daß die Isolierung an den Endbereichen jedes Leiterstreifenabschnitts entfernt ist und daß die Verbindung zwischen dem jeweiligen Ende eines Leiterstreifenabschnitts und der jeweiligen Leiterplatte über elektrisch leitende Kontaktelemente hergestellt ist, wobei zwischen den Kontaktelementen und den Adern des Leiterstreifenabschnitts jeweils eine Crimpverbindung und zwischen den Kontaktelementen und den Leiterbahnen der Leiterplatte jeweils eine Nietverbindung vorgesehen ist. Wie Versuche gezeigt haben, ist eine elektrische Verbindung zwischen den abisolierten Endbereichen der Leiter und den Leiterbahnen der Leiterplatte mittels metallischer Kontaktelemente besonders einfach und kostengünstig zu bewerkstelligen, insbesondere aber auch äußerst prozessicher.

Eine weitere Ausgestaltung der Erfindung sieht vor, daß der Leiterstreifen aus einer extrudierten, relativ formstabilen Profilleiste mit darin eingelagerten Drähten besteht und daß die Profilleiste als Klipsleiste und/oder Klebeleiste ausgebildet ist. Diese Maßnahmen sind bei relativ starren Systemen sinnvoll und bringen dann den besonderen Vorteil, daß sich die Leiterstreifen ohne zusätzliche Hilfsmittel montieren bzw. befestigen lassen und keiner zusätzlichen Abdeckung bedürfen.

Zur Vereinfachung des Anbringens des Leiterstreifens trägt weiterhin bei, daß gemäß einer Ausgestaltung der Erfindung vorgesehen ist, daß das Kunststoffgehäuse eine etwa rechteckige Kontur mit an den Längsrändern angeformten Klipsleisten, Klipsnasen oder dgl. für eine Klipsmontage des Leiterstreifens im Aufnahmekanal der Beleuchtungsleiste aufweist.

Die erfindungsgemäße Beleuchtungsleiste kann insbesondere als Handlauf-, Treppenstufen-, Gepäckfach-, Sockel- oder Fluchtwegmakierungsleiste gestaltet sein.

Ein Verfahren zum Herstellen eines isolierten, mehradrigen Leiterstreifens mit in Reihe hintereinander angeordneten LED-Elementen für eine Beleuchtungsleiste ist erfindungsgemäß gekennzeichnet durch die sich jeweils intermittierend wiederholenden Verfahrensschritte:
1. Abziehen eines Leiterstreifens endlicher Länge von einer Vorratsrolle und Zuführen zu einer Beschneidestation,
2. Ablängen eines Leiterstreifenabschnitts vorbestimmter Länge vom Leiterstreifen endlicher Länge und Festhalten des Leiterstreifenabschnitts mit einer Haltevorrichtung,
3. Abisolieren der einander benachbarten Endbereiche von Leiterstreifen und Leiterstreifenabschnitt,
4. Positionieren der abisolierten Endbereiche,
5. Zuführen einer mit zumindest einem LED-Element bestückten Leiterplatte,
6. Herstellen einer elektrischen Verbindung zwischen den abisolierten Endbereichen und den Leiterbahnen der Leiterplatte,
7. Weiterleiten des über die Leiterplatte wieder mit dem Leiterstreifen verbundenen Leiterstreifenabschnitts zu einer Aufwickeltrommel, wobei zwischen dem sechsten und siebten Verfahrensschritt die Leiterplatte einer Umspritzungsstation zugeführt und hier ebenso wie die Endbereiche er an der Leiterplatte angeschlossenen Leiter mit plastifiziertem Kunststoffmaterial umspritzt wird.

Bevorzugt werden die Verfahrensschritte zwei, drei und vier gleichzeitig in der Beschneidestation durchgeführt.

Es kann weiterhin vorgesehen werden, daß dem siebenten Verfahrensschritt ein Verfahrensschritt vorgeordnet ist, bei dem dem Leiterstreifen eine flexible Abdeckleiste von einer Vorratsrolle her zugeführt und mit dem Leiterstreifen und/oder mit den Leiterplatten verbunden wird.

Besonders empfehlenswert ist die Maßnahme, daß nach dem sechsten Verfahrensschritt und/oder nach dem Umspritzen einer jeden Leiterplatte eine Funktionsprüfung vorgenommen wird.

Ausführungsbeispiele der Erfindung werden im folgenden näher erläutert, und es zeigen:
- Fig. 1: eine erste Ausführungsform einer Beleuchtungsleiste,
- Fig. 2: eine zweite Ausführungsform einer Beleuchtungsleiste,
- Fig. 3: einen Leiterstreifen mit Leuchtmitteln,
- Fig. 4 - 6: verschiedene Ausführungsformen eines Leiterstreifens,
- Fig. 7: einen Anschlußbereich zwischen Leiterstreifen und Leiterplatte in Draufsicht,
- Fig. 8: einen Schnitt etwa folgend der Linie VIII - VIII in Fig. 7,
- Fig. 9: einen Schnitt etwa folgend der Linie IX - IX in Fig. 7,
- Fig. 10: einen Schnitt etwa folgend der Linie X - X in Fig. 7,
- Fig. 11: einen Schnitt durch eine Leiterplatten-Abdeckleisten-Verbindung,
- Fig. 12: eine schematische Darstellung des Herstellungsverfahrens,
- Fig. 13 - 15: eine andere Ausführungsform eines Leiterstreifens mit Leuchtmitteln und
- Fig. 16 - 17: eine noch andere Ausführungsform eines Leiterstreifens mit Leuchtmitteln, wobei die Fig. 13-17 nicht Bestandteil der Erfindung sind.

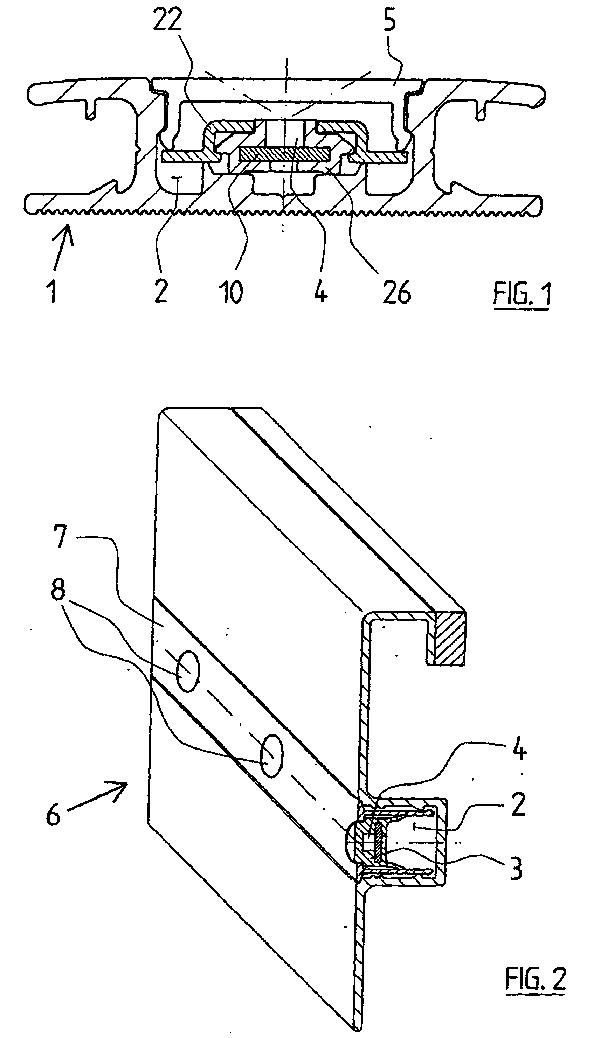

Fig. 1 zeigt eine Beleuchtungsleiste zum Einsatz als Bodenleiste 1. Die Beleuchtungsleiste kann aber auch als Handlauf-, Treppenstufen-, Gepäckfach-, Sockel- oder Fluchtwegmarkierungsleiste ausgebildet sein. Die Beleuchtungsleiste besteht im allgemeinen aus Aluminium oder einer Aluminiumlegierung, kann aber selbstverständlich auch aus einem Kunststoffmaterial gefertigt sein. In einem Aufnahmekanal 2 der Beleuchtungsleiste ist ein mehradriger Leiterstreifen 3, der mit in Reihe hintereinander angeordneten LED-Elementen 4 bestückt ist, angeordnet. Der Aufnahmekanal 2 ist nach oben hin durch eine Abschlußprofilleiste 5 aus einem transparenten Material verschlossen. Die Abschlußprofilleiste 5 besteht z. B. aus Polycarbonat.

In Fig. 2 ist eine Beleuchtungsleiste zum Einsatz als Sockel- bzw. Wandleiste 6 gezeigt. Auch diese Leiste weist einen Aufnahmekanal 2 und einen mehradrigen Leiterstreifen 3, der mit in Reihe hintereinander angeordneten LED-Elementen 4 bestückt ist, auf. Die Sockel- bzw, Wandleiste 6 besteht auch hier aus Aluminium, einer Aluminiumlegierung oder Kunststoff, was auch für die Abschlußprofilleiste 7 gilt, die mit Öffnungen 8 zum Lichtaustritt versehen ist.

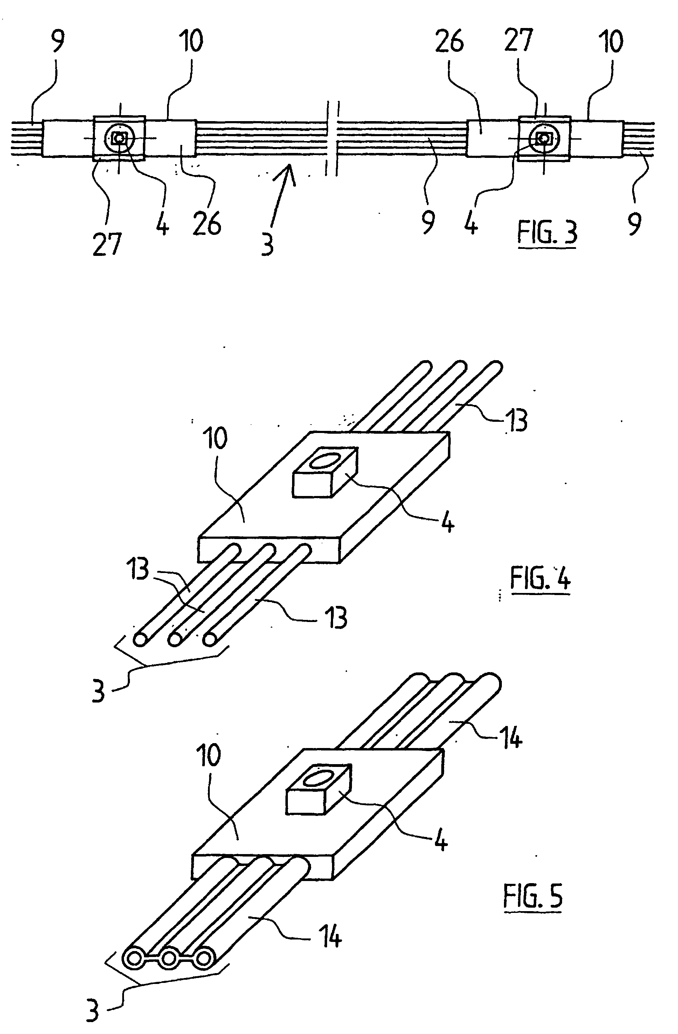

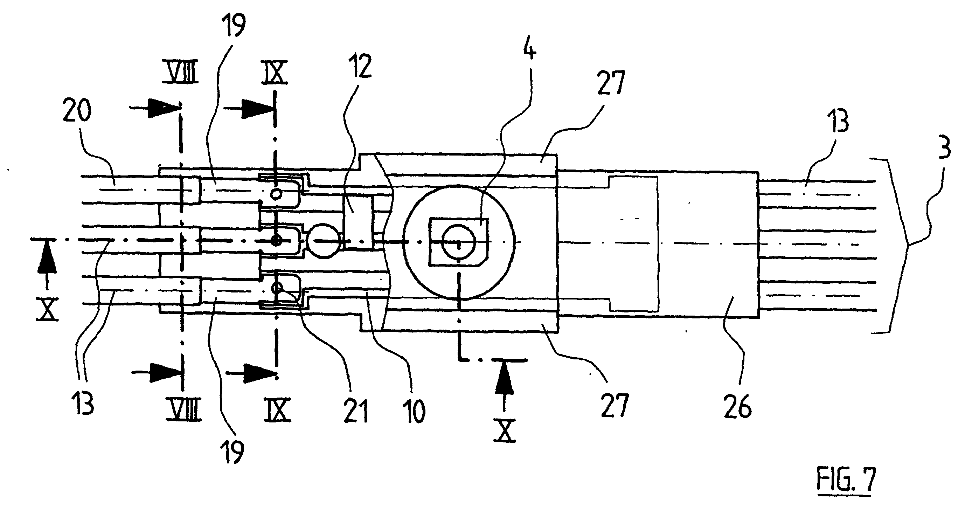

Fig. 3 zeigt einen mehradrigen Leiterstreifen 3, der aus einer Vielzahl von abgelängten, in axialer Richtung aneinandergereihten Leiterstreifenabschnitten 9 und zwischen den Leiterstreifenabschnitten 9 angeordneten und mit diesen elektrisch leitend verbundenen Leiterplatten 10 besteht, die in herkömmlicher Weise mit nicht näher dargestellten Leiterbahnen, z. B. nach Art einer gedruckten Schaltung versehen ist und trägt ein daran angeschlossenes LED-Element 4 und ggf. einen Widerstand 12 (vgl. Fig. 7). Die Anzahl der Adern des Leiterstreifens 3 ist beliebig und richtet sich nach der jeweils gewollten Beleuchtungsart, wie permanente Ausleuchtung oder ggf. laufendes Licht.

Während der Leiterstreifen 3 nach Fig. 3 fünfadrig ausgebildet ist, besteht der Leiterstreifen 3 nach Fig. 4 und 5 aus jeweils drei Adern. Dabei können die Leiterstreifen 3, wie in Fig. 4 gezeigt, aus einzelnen jeweils eine Isolierung aufweisenden Drähten 13 oder, wie in Fig. 4 gezeigt nach Art eines flexiblen Flachkabels 14 ausgebildet sein. In beiden Fällen ist der Leiterstreifen 3 in Leiterstreifenabschnitte 9 unterteilt und diese sind mit ihren Endbereichen jeweils an eine zumindest ein LED-Element 4 tragende Leiterplatte 10 angebunden.

Es besteht auch die Möglichkeit, einen Leiterstreifen 3 aus einer extrudierten, relativ formstabilen Profilleiste 15 mit darin eingelagerten isolierten oder nicht isolierten Leiterdrähten zu bilden und hiernach in Leiterstreifenabschnitte 9 aufzuteilen. Diese in Fig. 6 gezeigte Möglichkeit besitzt den Vorteil, an den Leiterstreifen 3 Klipsnasen 16 anformen zu können zwecks einfacher Klipsbefestigung des Leiterstreifens 3 im Aufnahmekanal 2 der jeweiligen Beleuchtungsleiste. Ferner kann die Profilleiste 15 bodenseitig mit einem Doppelklebeband 17 ausgestattet sein, so daß die Profilleiste 15 nach dem Abziehen einer Schutzfolie 18 auf den Boden des Aufnahmekanals 2 geklebt werden kann. Auch beim Beispiel nach Fig. 6 wechseln Profilleisteabschnitte 15 und mit LED-Elementen 4 bestückte Leiterplatten 10 einander ab.

In Fig. 7 ist der Kabelverbund mit einer Leiterplatte 10 gezeigt. Im Beispiel sind drei Drähte 13 in verschiedenen Farben, z. B. rot für Pluspol schwarz für Minuspol und weiß für Mittelleiter ausgeführt und elektrisch leitend mit der Leiterplatte 10 verbunden. Anstelle der einzelnen Drähte 13 eines jeden Leiterstreifenabschnitts 9 kann auch ein Flachkabel 14 nach Fig. 5 oder eine Profilleiste 15 nach Fig. 6 vorgesehen werden. Im Beispiel nach Fig. 7 trägt die Leiterplatte 10 ein LED-Element 4 und einen Widerstand 12.

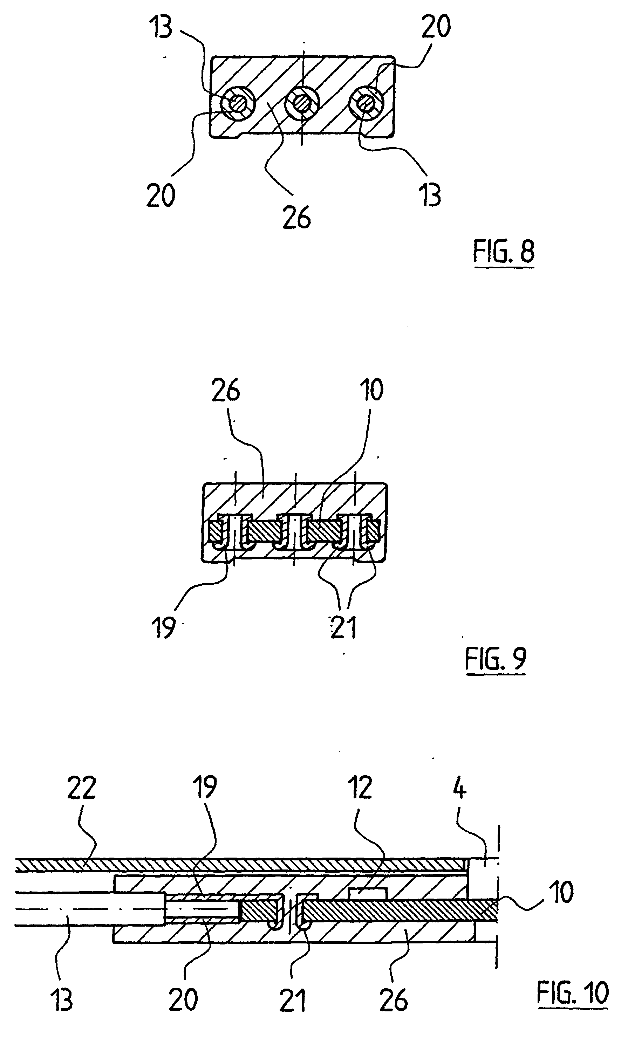

Bevorzugt wird der Kabelverbund mittels elektrischer Kontaktelemente 19 hergestellt, wobei - vgl. auch Fig. 8 - zwischen den Kontaktelementen 19 und den Adern der Drähte 13 jeweils eine Crimpverbindung 20 und zwischen den Kontaktelementen 19 und den Leiterbahnen der Leiterplatte 10 - vgl. auch Fig. 9 - jeweils eine Nietverbindung 21 vorgesehen ist. Die genannten Verbindungen 20, 21 sind auch deutlich aus der Längsschnittdarstellung nach Fig. 10 ersichtlich.

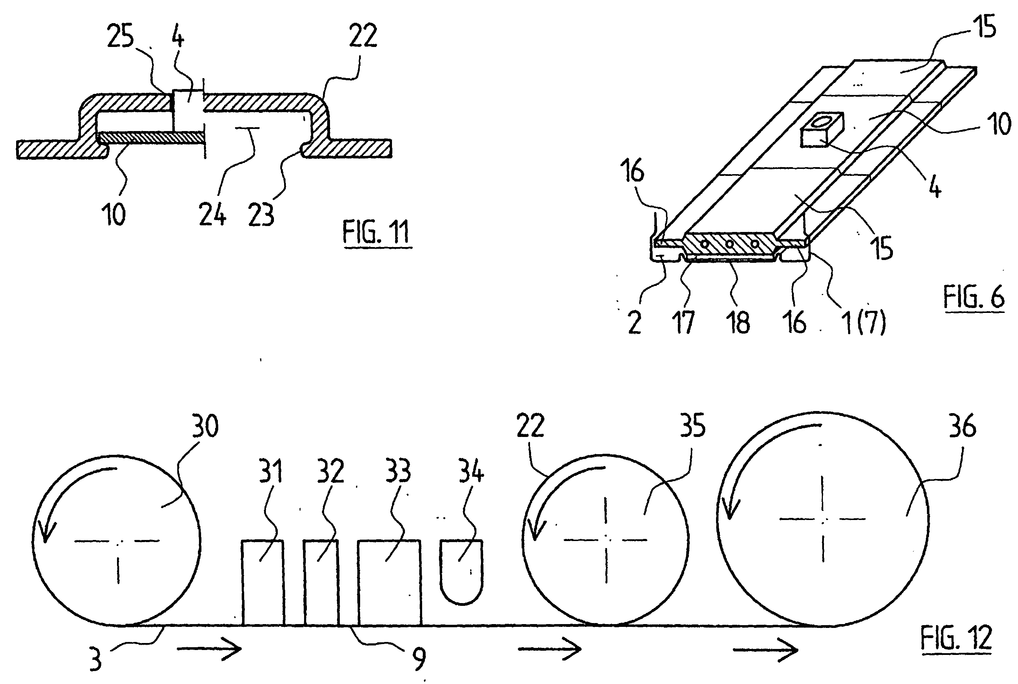

Nach der Herstellung des Kabelverbunds zwischen einer Vielzahl von Leiterstreifenabschnitten 9 und einer Vielzahl von mit LED-Elementen 4 bestückten Leiterplatten 10 wird diese Baueinheit für eine einfache Ausführungsform einer Beleuchtungsleiste, die keine wasserdichte Abdichtung der elektrischen Verbindungsstellen verlangt, mit einer Abdeckleiste 22 nach Fig. 11 zusammengebracht. Die Abdeckleiste 22 weist einen durch Rastnasen 23 verengten Kanal 24 auf, der das Einklipsen der Leiterplatte 10 ermöglicht. Weiterhin weist die Abdeckleiste 22 in Reihe hintereinander angeordnete Öffnungen 25 zum Durchlaß der LED-Elemente 4 auf. Der Gegenstand nach Fig. 11 kann nun in einen Aufnahmekanal 2 einer z. B. Bodenleiste 1 eingebracht und darin durch die sich selbstverriegelnde Abschlußprofilleiste 5 abgestützt und gehalten werden, etwa wie in Fig. 1 gezeigt.

Für Beleuchtungsleisten, bei denen keine Abdichtungsprobleme auftreten dürfen, ist bevorzugterweise vorgesehen, daß die Endbereiche der Leiterstreifenabschnitte 9, die Kontaktelemente 19, die Leiterplatten 10 und die LED-Elemente 4 jeweils in einem nur die Lichtaustrittsseite der LED-Elemente 4 freilassenden, durch unmittelbares Umspritzen gebildetes farbiges Kunststoffgehäuse 26 eingekapselt sind. Das Kunststoffgehäuse 26 ist in den Fig. 7 bis 10 gezeigt und kann auch mit einstückig angespritzten Klipsleisten 27 zur Befestigungsanordnung in einer Abdeckleiste 22 (vgl. auch Fig. 11) ausgebildet sein.

Das Kunststoffgehäuse 26 kann auch aus einem transparenten Material bestehen und auch die Lichtaustrittsseite der LED-Elemente 4 mit einkapseln, wobei es sich empfiehlt, an den Lichtaustrittsseiten der einzelnen LED-Elemente 4 jeweils einen nicht näher dargestellten Materialansatz zum passenden Eingriff in die Aufnahmeöffnungen 8 der Abschlußprofilleiste 7 (Fig. 2) anzuformen.

Zum Durchführen des Verfahrens zum Herstellen eines Beleuchtungsstreifens für eine Beleuchtungsleiste der in den Fig. 1 und 2 beispielhaft dargestellten Art, kann eine in Fig. 12 in schematischer Darstellungsmanier gezeigte Fertigungseinrichtung eingesetzt werden. Dabei wird von einer Vorratsrolle 30 ein Leiterstreifen 3 endlicher Länge abgezogen und einer Beschneidestation 31 zugeführt. Die Beschneidestation 31 ist mit Werkzeugen ausgerüstet, die den Leiterstreifen 3 durch Beschnitt jeweils in Leiterstreifenabschnitte 9 unterteilen, um sodann die einander benachbarten Endbereiche von Leiterstreifen 3 und Leiterstreifenabschnitt 9 abzuisolieren. Die Werkzeuge halten die abisolierten Endbereiche fest und fahren soweit auseinander, daß in einer Zuführstation 32 zunächst die Kontaktelemente 19 an die abisolierten Endbereiche zwecks Herstellung einer Crimpverbindung 20 und an die zugeführte Leiterplatte 10 zwecks Herstellung einer Nietverbindung 21 angeschlagen werden können. Je nach Werkzeugauslegung können Beschneidestation 31 und Zuführstation 32 räumlich zusammenfallen oder auch räumlich voneinander getrennt sein. Die jeweils zugeführte Leiterplatte 10 ist zumindest mit einem vormontierten LED-Element 4 ggf. aber auch mit einem vormontierten Widerstand 12 ausgerüstet. Die mit den Kabelenden elektrisch leitend verbundene Leiterplatte 10 wird weitertransportiert und einer Umspritzungsstation 33 zugeführt. In der Umspritzungsstation 33 werden dann die Leiterplatte 10 wie auch die Kontaktelemente 19 und die Endbereiche der an die Leiterplatte 10 angeschlossenen Leiter mit plastifiziertem Kunststoffmaterial umspritzt. Beim Einsatz eines farbigen Kunststoffmaterials wird die Lichtaustrittsseite des LED-Elements 4 vom Kunststoffmaterial freigehalten, während ein völliges Umspritzen und Einkapseln dann vorgesehen wird, wenn ein transparentes, lichtdurchlässiges Kunststoffmaterial zum Einsatz gelangt. Der Umspritzungsstation 33 folgt eine Kontrollstation 34, in der eine 100 %ige Lichtkontrolle durchgeführt wird. Nach der Lichtkontrolle wird dem Beleuchtungsstreifen eine Abdeckleiste 22 von einer Vorratsrolle 35 her zugeführt. Dabei erfolgt eine Verrastung z. B. mit den Klipsleisten 27 der Kunststoffgehäuse 26. Hiernach wird der vervollständigte Beleuchtungsstreifen auf eine Magazinrolle 36 aufgewickelt und für eine Verlegung im Aufnahmekanal 2 einer Beleuchtungsleiste bereitgehalten. Bei Beleuchtungsstreifen mit hinsichtlich Dichtigkeit geringerem Anforderungsprofil kann das Umspritzen entfallen, während bei Beleuchtungsstreifen mit aus Profilleisten 15 gebildeten Leiterstreifenabschnitten 9 auf ein Zuführen einer separaten Abdeckleiste 22 verzichtet werden kann.

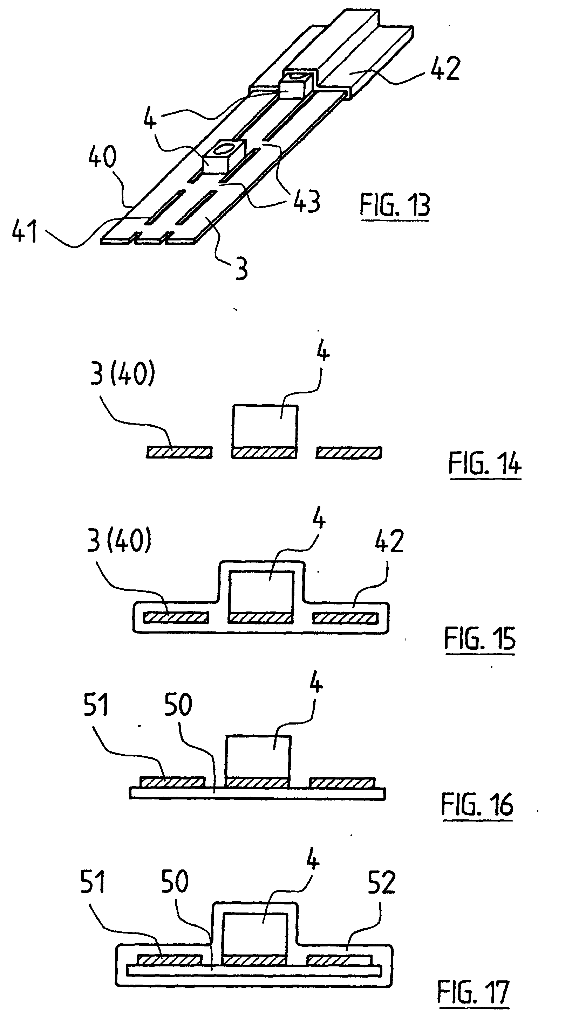

Bei der Verwirklichungsform für die Herstellung eines Leiterstreifens 3 nach Fig. 13 bis 15 wird von einem gestanzten Kupferband 40 mit Stanzöffnungen 41 ausgegangen. Auf den durch die Stanzöffnungen 41 gebildeten Mittelleiter des Kupferbands 40 werden in vorbestimmten Abständen LED-Elemente 4 und ggf. Widerstände 12 in herkömmlicher Weise angeschlossen, wobei an ein intermittierendes Durchlaufverfahren gedacht ist. Die so vorbereitete Einheit wird durch ein Werkzeug einer Extrusionsvorrichtung geführt und hier mit einem aus glasklarem bzw. transparentem Kunststoffmaterial bestehenden Schlauchprofil 42 umhüllt, wobei allerdings das Kupferband 40 vor dem Umhüllen in den Bereichen 43 freigeschnitten wird, um die Andern des Kupferbands 40 voneinander zu trennen. Das Schlauchprofil 42 besteht aus einem, das Kupferband 40 und die Leuchtmittel eng umschließenden Material mit Schwindungseigenschaften. Die Darstellung nach Fig. 14 zeigt den Leiterstreifen 3 vor und die nach Fig. 15 nach dem Umhüllen.

Eine noch andere Verwirklichungsform des Beleuchtungsstreifens zeigen die Fig. 16 und 17. Hier sind auf einem Folienstreifen 50 drei oder mehr Kupferstreifen 51 aufkaschiert und diese tragen in elektrisch leitend angeschlossener Weise LED-Elemente 4 und ggf. Widerstände 12. Der Folienstreifen 50 wird anschließend zusammen mit den Kupferstreifen 51 und den Beleuchtungsmitteln im Extrusionsverfahren mit einem Schlauchprofil 52 umhüllt, wobei das Schlauchprofil 52 aus einem transparenten Kunststoffmaterial mit Schwindungseigenschaften besteht.

Die Verwirklichungsformen nach den Figuren 13 bis 17 sind jedoch nicht Bestandteil der Erfindung Hinsichtlich der elektrischen Schaltkreise und der Leitungsführung wird von dem insoweit üblichen Stand der Technik Gebrauch gemacht, so daß eine diesbezügliche Erläuterung nicht notwendig ist. Gleiches gilt für die möglichen Ausführungs- und Gestaltungsformen der Beleuchtungsleiste nebst End-, Eck- oder Kreuzstücken. Als Beispiel für die Ausführungen der Beleuchtungsleiste wird auf den Gegenstand der eingangs erwähnten EP 0 669 492 A1 verwiesen.

Die Maßnahme nach Anspruch 2, die Verbindung zwischen dem jeweiligen Ende eines Leiterstreifenabschnitts 9 und der jeweiligen Leiterplatte 10 über elektrisch leitende Kontaktelemente 19 herzustellen und zwischen den Kontaktelementen 19 und den Adern des Leiterstreifenabschnitts 9 jeweils eine Crimpverbindung 20 und zwischen den Kontaktelmenten 19 und den Leiterbahnen der Leiterplatte 10 jeweils eine Nietverbindung 21 vorzusehen, hat sich als vorteilhaft erwiesen. Wie jedoch Versuche gezeigt haben, ist eine besonders rationelle, funktionssichere und kostengünstige elektrische Verbindung zwischen dem jeweiligen Ende eines Leiterstreifenabschnitts 9 und der jeweiligen Leiterplatte 10 durch Löten, Hartlöten oder insbesondere auch Verschweißen herstellbar mit dem Vorteil, der Einsparung von Bauelementen und Arbeitsschritten.

## Patentansprüche

1. Beleuchtungsleiste mit einem Aufnahmekanal (2) und mit einem darin anordbaren mehradrigen Leiterstreifen (3), der mit in Reihe hintereinander angeordneten LED-Elementen (4) bestückt ist, wobei der Leiterstreifen (3) aus einer Vielzahl von abgelängten, in axialer Richtung aneinandergereihten Leiterstreifenabschnitten (9) besteht, jeweils zwischen zwei axial aneinandergrenzenden Leiterstreifenabschnitten (9) eine mit diesen elektrisch leitend verbundene Leiterplatte (10) angeordnet ist, und jede Leiterplatte (10) mit einem LED-Element (4) bestückt ist, **dadurch gekennzeichnet, daß** die Endbereiche der Leiterstreifenabschnitte (9), die Leiterplatten (10) und die LED-Elemente (4) jeweils in einem nur die Lichtaustrittsseite der LED-Elemente (4) freilassenden, durch unmittelbares Umspritzen gebildetes farbiges Kunststoffgehäuse oder jeweils in einem durch unmittelbares Umspritzen mit einem transparenten Kunststoffmaterial, wie Polycarbonat, gebildetes Kunststoffgehäuse (26) eingekapselt sind, und daß der Leiterstreifen (3) in einem Aufnahmekanal (24) einer Abdeckleiste (22) aus undurchsichtigem Material angeordnet ist, die zum Durchtritt der LED-Elemente (4) in Reihe hintereinander ausgebildete Lochungen (25) aufweist, wobei der Leiterstreifen (3) und die Abdeckleiste (22) eine vorkonfektionierte Einbaueinheit zur Anordnung im Aufnahmekanal (2) der Beleuchtungsleiste ist und diese Einbaueinheit durch eine, ebenfalls in den Aufnahmekanal (2) eingreifende und hier kraft- und/oder formschlüssig gehaltene Abschlußprofilleiste (5) aus einem transparenten Kunststoffmaterial überdeckt und lageorientiert gehalten ist.

2. Beleuchtungsleiste nach Anspruch 1, **dadurch gekennzeichnet, daß** die einzelnen Adern des Leiterstreifens (3) mit einer Isolierung umhüllt sind, daß die Isolierung an den Endbereichen jedes Leiterstreifenabschnitts (9) entfernt ist und daß die Verbindung zwischen dem jeweiligen Ende eines Leiterstreifenabschnitts (9) und der jeweiligen Leiterplatte (10) über elektrisch leitende Kontaktelemente (19) hergestellt ist, wobei zwischen den Kontaktelementen (19) und den Adern des Leiterstreifenabschnitts (9) jeweils eine Crimpverbindung (20) und zwischen den Kontaktelementen (19) und den Leiterbahnen der Leiterplatte (10) jeweils eine Nietverbindung (21) vorgesehen ist.

3. Beleuchtungsleiste nach Anspruch 1 oder 2, **dadurch gekennzeichnet, daß** jedes Kunststoffgehäuse (26) an der Lichtaustrittsseite der LED-Elemente (4) einen angeformten Materialansatz zum passenden Eingriff in eine mit entsprechenden Aufnahmeöffnungen (8) versehene Abdeckung (7) der Beleuchtungsleiste aufweist.

4. Beleuchtungsleiste nach wenigstens einem der Ansprüche 1 bis 3, **dadurch gekennzeichnet, daß** der Leiterstreifen (3) aus einer extrudierten, relativ formstabilen Profilleiste (15) mit darin eingelagerten Drähten besteht, wobei die Profilleiste (15) als Klipsleiste und/oder Klebeleiste ausgebildet ist.

5. Beleuchtungsleiste nach wenigstens einem der Ansprüche 1 bis 4, **dadurch gekennzeichnet, daß** das Kunststoffgehäuse (26) eine etwa rechteckige Kontur mit an den Längsrändern angeformten Klipsleisten, Klipsnasen (16) oder dgl. für eine Klipsmontage des Leiterstreifens (3) im innerhalb der Beleuchtungsleiste ausgebildeten Aufnahmekanal (2) aufweist.

6. Beleuchtungsleiste nach zumindest einem der vorhergehenden Ansprüche, gestaltet als Handlauf-, Treppenstufen-, Gepäckfach-, Sockel- oder Fluchtwegmarkierungsleiste.

7. Verfahren zum Herstellen eines isolierten mehradrigen Leiterstreifens (3) mit in Reihe hintereinander angeordneten LED-Elementen (4) für eine Beleuchtungsleiste nach den Ansprüchen 1 bis 6, **gekennzeichnet durch** die sich jeweils intermittierend wiederholenden Verfahrensschritte:
1. Abziehen eines Leiterstreifens (3) endlicher Länge von einer Vorratsrolle (30) und Zuführen zu einer Beschneidestation (31),
2. Ablängen eines Leiterstreifenabschnitts (9) vorbestimmter Länge vom Leiterstreifen (3) endlicher Länge und Festhalten des Leiterstreifenabschnitts (9) mit einer Haltevorrichtung,
3. Abisolieren der einander benachbarten Endbereiche von Leiterstreifen (3) und Leiterstreifenabschnitt (9),
4. Positionieren der abisolierten Endbereiche,
5. Zuführen einer mit zumindest einem LED-Element (4) bestückten Leiterplatte (10),
6. Herstellen einer elektrischen Verbindung zwischen den abisolierten Endbereichen und den Leiterbahnen der Leiterplatte (10),
7. Weiterleiten des über die Leiterplatte (10) wieder mit dem Leiterstreifen (3) verbundenen Leiterstreifenabschnitts (9) zu einer Aufwickeltrommel (36),
wobei zwischen dem sechsten und siebenten Verfahrensschritt die Leiterplatte (10) einer Umspritzungsstation (33) zugeführt und hier ebenso wie die Endbereiche der an die Leiterplatte (10) angeschlossenen Leiter mit plastifiziertem Kunststoffmaterial umspritzt wird.

8. Verfahren nach Anspruch 7, **dadurch gekennzeichnet, daß** die Verfahrensschritte zwei, drei und vier gleichzeitig in der Beschneidestation (31) durchgeführt werden.

9. Verfahren nach Anspruch 7, **dadurch gekennzeichnet, daß** dem siebenten Verfahrensschritt ein Verfahrensschritt vorgeordnet ist, bei dem dem Leiterstreifen (3) eine flexible Abdeckleiste (22) von einer Vorratsrolle (35) her zugeführt und mit dem Leiterstreifen (3) und/oder mit den Leiterplatten (10) verbunden wird.

## Claims

1. Lighting strip having a receiving channel (2) and a multi-wire conductor strip (3) which can be arranged in the said receiving channel and is fitted with LED elements (4) arranged in a row one behind the other, the conductor strip (3) comprising a multiplicity of conductor strip sections (9) which are cut to length and arranged in a row in the axial direction, a printed circuit board (10) being respectively arranged between two axially adjacent conductor strip sections (9) and connected to them in an electrically conducting manner, and each printed circuit board (10) being fitted with an LED element (4), **characterized in that** the end regions of the conductor strip sections (9), the printed circuit board (10) and the LED elements (4) are respectively encapsulated in a coloured plastic housing which leaves only the light outlet side of the LED elements (4) exposed and is formed by direct overmoulding or are respectively encapsulated in a plastic housing (26) formed by direct overmoulding with a transparent plastics material, such as polycarbonate, and **in that** the conductor strip (3) is arranged in a receiving channel (24) of a covering strip (22) of opaque material, which has punched holes (25) formed one behind the other in a row for the LED elements (4) to pass through, the conductor strip (3) and the covering strip (22) being a prefabricated flush-mounted unit for arrangement in the receiving channel (2) of the lighting strip, and this flush-mounted unit being held in a covered and correctly positioned manner by a terminating profiled strip (5) of a transparent plastics material which likewise engages in the receiving channel (2) and is in this case held by positive and/or non-positive engagement.

2. Lighting strip according to Claim 1, **characterized in that** the individual wires of the conductor strip (3) are sheathed with an insulation, **in that** the insulation is removed at the end regions of each conductor strip section (9) and **in that** the connection between the respective end of a conductor strip section (9) and the respective printed circuit board (10) is produced by means of electrically conducting contact elements (19), a crimped connection (20) being respectively provided between the contact elements (19) and the wires of the conductor strip section (9) and a riveted connection (21) being respectively provided between the contact elements (19) and the conductor tracks of the printed circuit board (10).

3. Lighting strip according to Claim 1 or 2, **characterized in that** each plastic housing (26) has on the light outlet side of the LED elements (4) an integrally formed material attachment for fitting into a covering (7) of the lighting strip provided with corresponding receiving openings (8).

4. Lighting strip according to at least one of Claims 1 to 3, **characterized in that** the conductor strip (3) comprises an extruded, relatively dimensionally stable profiled strip (15) with wires incorporated in it, the profiled strip (15) being formed as a clip-on strip and/or stick-on strip.

5. Lighting strip according to at least one of Claims 1 to 4, **characterized in that** the plastic housing (26) has an approximately rectangular contour with clip-on strips, clip-on tabs (16) or the like, which are integrally formed on the longitudinal edges, for clip-on mounting of the conductor strip (3) in the receiving channel (2) formed within the lighting strip.

6. Lighting strip according to at least one of the preceding claims, designed as a handrail, staircase, baggage-compartment, skirting or escape-route marking strip.

7. Method for manufacturing an insulated multi-wire conductor strip (3) having LED elements (4) arranged in a row one behind the other for a lighting strip according to Claims 1 to 6, **characterized by** the following method steps recurring at intermittent intervals:
1. a conductor strip (3) of finite length is drawn off a supply roll (30) and is fed to a cutting station (31),
2. a conductor strip section (9) of predetermined length is cut to length from the conductor strip (3) of finite length, and the conductor strip section (9) is held firmly by a holding device,
3. the mutually adjacent end regions of the conductor strip (3) and the conductor strip section (9) are stripped of insulation,
4. the stripped end regions are positioned,
5. a printed circuit board (10) which is fitted with at least one LED element (4) is supplied,
6. an electrical connection is produced between the stripped end regions and the conductor tracks on the printed circuit board (10),
7. the conductor strip section (9) which is connected to the conductor strip (3) again via the printed circuit board (10) is passed on to a winding-up drum (36),
the printed circuit board (10) being fed to an overmoulding station (33) between the sixth and seventh method steps and, in the same way as the end regions of the conductors which are connected to the printed circuit board (10), overmoulded there with plasticized plastics material.

8. Method according to Claim 7, **characterized in that** the method steps two, three and four are carried out simultaneously in the cutting station (31).

9. Method according to Claim 7, **characterized in that** the seventh method step is preceded by a method step in which the conductor strip (3) is supplied with a flexible covering strip (22) from a supply roll (35), and said flexible covering strip is connected to the conductor strip (3) and/or to the printed circuit boards (10).

## Revendications

1. Rampe d'éclairage avec un canal de réception (2) et avec un ruban conducteur à plusieurs brins (3) à disposer dans celui-ci, qui est équipé d'éléments LED (4) disposés en série l'un à côté de l'autre, dans laquelle le ruban conducteur (3) se compose d'une pluralité de segments de ruban conducteur (9) coupés à longueur, disposés en série l'un derrière l'autre en direction axiale, dans laquelle une plaquette de circuits imprimés (10) est disposée chaque fois entre deux segments de ruban conducteur (9) adjacents axialement l'un à l'autre, en liaison électriquement conductrice avec ceux-ci, et dans laquelle chaque plaquette de circuits imprimés (10) est équipée d'un élément LED (4), **caractérisée en ce que** les zones d'extrémité des segments de ruban conducteur (9), les plaquettes de circuits imprimés (10) et les éléments LED (4) sont encapsulés chacun dans un boîtier de plastique coloré formé par projection directe et ne laissant libre que la face de sortie de la lumière des éléments LED (4) ou chaque fois dans un boîtier de plastique (26) formé par projection directe avec une matière plastique transparente, comme du polycarbonate, et **en ce que** le ruban conducteur (3) est disposé dans un canal de réception (24) d'une moulure de recouvrement (22) en matériau opaque, qui présente des trous (25) formés en série l'un derrière l'autre pour le passage des éléments LED (4), dans laquelle le ruban conducteur (3) et la moulure de recouvrement (22) forment une unité de montage préassemblée à disposer dans le canal de réception (2) de la rampe d'éclairage et cette unité de montage est recouverte et maintenue en position orientée par un profilé de fermeture (5) en matière plastique transparent également engagé dans le canal de réception (2) et maintenu dans celui-ci par serrage et emboîtement.

2. Rampe d'éclairage suivant la revendication 1, **caractérisée en ce que** les brins individuels du ruban conducteur (3) sont gainés d'un isolant, **en ce que** l'isolant est enlevé dans les zones d'extrémité de chaque segment de ruban conducteur (9) et **en ce que** le raccordement entre l'extrémité respective d'un segment de ruban conducteur (9) et la plaquette de circuits imprimés respective (10) est réalisé par des éléments de contact électriquement conducteurs (19), dans laquelle il est prévu chaque fois un sertissage crimp (20) entre les éléments de contact (19) et les brins du segment de ruban conducteur (9) et chaque fois un assemblage rivé (21) entre les éléments de contact (19) et les voies conductrices de la plaquette de circuits imprimés (10).

3. Rampe d'éclairage suivant la revendication 1 ou 2, **caractérisée en ce que** chaque boîtier de plastique (26) présente, sur le côté de sortie de la lumière des éléments LED (4), un ergot matériel façonné pour l'accrochage ajusté dans un couvercle (7) de la rampe d'éclairage pourvu d'ouvertures de réception correspondantes (8).

4. Rampe d'éclairage suivant au moins une des revendications 1 à 3, **caractérisée en ce que** le ruban conducteur (3) se compose d'une moulure profilée extrudée (15), de forme relativement stable, avec des fils noyés dans celle-ci, dans laquelle la moulure profilée (15) est constituée par une moulure à clipser et/ou une moulure à coller.

5. Rampe d'éclairage suivant au moins une des revendications 1 à 4, **caractérisée en ce que** le boîtier de plastique (26) présente un contour sensiblement rectangulaire avec des moulures à clipser, des ergots à clipser (16) ou analogues façonnés sur les bords longitudinaux pour un montage par clipsage du ruban conducteur (3) dans le canal de réception (2) formé à l'intérieur de la rampe d'éclairage.

6. Rampe d'éclairage suivant au moins une des revendications précédentes, configurée en tant que rampe de main courante, de marches d'escalier, de compartiments à bagages, en forme de plinthe ou de rampe de repérage de voie de fuite.

7. Procédé pour fabriquer un ruban conducteur isolé à plusieurs brins (3) avec des éléments LED (4) disposés en série l'un derrière l'autre pour une rampe d'éclairage suivant les revendications 1 à 6, **caractérisé par** les étapes qui se répètent chacune par intermittence:
1. Tirer un ruban conducteur (3) de longueur finie d'une bobine d'alimentation (30) et l'amener à une station de découpage (31),
2. Couper à longueur un segment de ruban conducteur (9) de longueur prédéterminée à partir du ruban conducteur (3) de longueur finie et maintenir le segment de ruban conducteur (9) avec un dispositif de fixation,
3. Dénuder les zones d'extrémité proches l'une de l'autre du ruban conducteur (3) et du segment de ruban conducteur (9),
4. Positionner les zones d'extrémité dénudées,
5. Introduire une plaquette de circuits imprimés (10) équipée d'au moins un élément LED (4),
6. Réaliser un raccordement électrique entre les zones d'extrémité dénudées et les voies conductrices de la plaquette de circuits imprimés (10),
7. Conduire à un tambour de bobinage (36) le segment de ruban conducteur (9) à nouveau raccordé au ruban conducteur (3) par la plaquette de circuits imprimés (10),
dans lequel la plaquette de circuits imprimés (10) est conduite à une station d'enrobage par projection (33) entre les sixième et septième étapes, et elle y est enrobée avec une matière plastique plastifiée tout comme les zones d'extrémité des conducteurs raccordés à la plaquette de circuits imprimés (10).

8. Procédé suivant la revendication 7, **caractérisé en ce que** les étapes deux, trois et quatre sont exécutées en même temps dans la station de découpage (31).

9. Procédé suivant la revendication 7, **caractérisé en ce que** l'étape sept est précédée d'une étape, dans laquelle une moulure de recouvrement souple (22) est amenée vers le ruban conducteur (3) à partir d'une bobine d'alimentation (35) et est raccordée au ruban conducteur (3) et/ou aux plaquettes de circuits imprimés (10).
